# EUROPEAN PATENT APPLICATION

(11) **EP 4 539 479 A1**
(43) Date of publication of application: **16.04.2025**
(21) Application number: 23818838.7
(22) Date of filing: 24.04.2023
(51) Int. Cl.: H04N 21/472

(54) **VIDEO DISPLAY METHOD AND DEVICE**

(30) Priority: 10.06.2022 CN 202210655558
(71) Applicant: Beijing Zitiao Network Technology Co., Ltd., Beijing 100190 (CN)
(72) Inventor: WANG, Yaozheng, Beijing 100028 (CN)
(74) Representative: Dentons UK and Middle East LLP
(86) International application number: PCT/CN2023/090252
(87) International publication number: WO 2023/236671

(57) **Abstract**

Disclosed in the present application is a video display method. In one example, the method can be executed by a client. The client can display a first page corresponding to a first video. The first video is a video in a live stream of a first type. When the client displays the first page, a first user can trigger a first sliding operation for the first page. Correspondingly, the client can display a second page corresponding to a second video in response to the first sliding operation. The second video is a video in a live stream of a second type.

## Description

This application claims priority to Chinese application NO. 202210655558.8, titled "VIDEO DISPLAY METHOD AND DEVICE", filed June 10, 2022, with the China National Intellectual Property Administration, which is incorporated herein by reference in its entirety.

### FIELD

The present disclosure relates to the field of computer technology, in particular to a method and an apparatus for video displaying.

### BACKGROUND

With the development of computer technology, some applications can provide live streaming functionalities. A user can initiate a live stream, and can watch the live stream.

How to improve the user experience in using live streaming functionalities is problem to be solved at present.

### SUMMARY

A method and an apparatus for video displaying are provided according to embodiments of the present disclosure, in order to solve, at least partially, the above-identified problem.

In a first aspect, a method for video displaying, applied to a client, is provided according to an embodiment of the present disclosure, the method including:
displaying a first page corresponding to a first video, where the first video is in a live stream of a first type, and
displaying, in response to a first slide operation triggered by a first user on the first page, a second page corresponding to a second video, where the second video is in a live stream of a second type.

In an embodiment, first prompt information is presented in a predetermined region of the first page, to prompt the first user to watch the live stream of the second type.

In an embodiment, the method further includes:
presenting second prompt information during triggering of the first slide operation by the first user, where the second prompt information is used to prompt the first user to finish the first slide operation to watch the live stream of the second type.

In an embodiment, the method further includes:
sending a vibration request to an operating system of a terminal device, where the vibration request is used to request the terminal device to provide a vibration response, and the terminal device is a terminal device on which the client runs.

In an embodiment, displaying the first page corresponding to the first video includes:
displaying a first image in the first video on the first page,
and the method further includes:
   presenting the first page corresponding to the first video in response to a second slide operation triggered by the first user on the second page, and displaying a second image in the first video on the first page.

In an embodiment, the live stream of the first type includes a live stream followed by the first user, and the live stream of the second type includes a recommended live stream corresponding to the first user.

In an embodiment, the live stream followed by the first user includes multiple videos ranked in a predetermined order, and the first video is a last-ranked video of the multiple videos.

In an embodiment, a slide direction corresponding to the first slide operation is opposite to a slide direction corresponding to the second slide operation.

In an embodiment, the recommended live stream corresponding to the first user includes multiple videos ranked in a predetermined order, and the second video is a first-ranked video of the multiple videos.

In a second aspect, an apparatus for video displaying, applied to a client, is provided according to an embodiment of the present disclosure, the apparatus including:
a first displaying unit, configured to display a first page corresponding to a first video, where the first video is in a live stream of a first type, and
a second displaying unit, configured to display, in response to a first slide operation triggered by a first user on the first page, a second page corresponding to a second video, where the second video is in a live stream of a second type.

In an embodiment, first prompt information is presented in a predetermined region of the first page, to prompt the first user to watch the live stream of the second type.

In an embodiment, the apparatus further includes:
a third displaying unit, configured to present second prompt information during triggering of the first slide operation by the first user, where the second prompt information is used to prompt the first user to finish the first slide operation to watch the live stream of the second type.

In an embodiment, the apparatus further includes:
a sending unit, configured to send a vibration request to an operating system of a terminal device, where the vibration request is used to request the terminal device to provide a vibration response, and the terminal device is a terminal device on which the client runs.

In an embodiment, the first displaying unit is configured to display a first image in the first video on the first page, and the apparatus further includes:
a fourth displaying unit, configured to present the first page corresponding to the first video in response to a second slide operation triggered by the first user on the second page, and displaying a second image in the first video on the first page.

In an embodiment, the live stream of the first type includes a live stream followed by the first user, and the live stream of the second type includes a recommended live stream corresponding to the first user.

In an embodiment, the live stream followed by the first user includes multiple videos ranked in a predetermined order, and the first video is a last-ranked video of the multiple videos.

In an embodiment, a slide direction corresponding to the first slide operation is opposite to a slide direction corresponding to the second slide operation.

In an embodiment, the recommended live stream corresponding to the first user includes multiple videos ranked in a predetermined order, and the second video is a first-ranked video of the multiple videos.

In a third aspect, a device is provided according to an embodiment of the present disclosure, the device including a processor and a memory,
where the processor is configured to execute instructions stored on the memory, to cause the device to perform the method in the first aspect.

In a fourth aspect, a computer-readable storage medium with instructions stored thereon is provided according to an embodiment of the present disclosure, where the instructions instruct a device to perform the method in the first aspect.

In a fifth aspect, a computer program product is provided according to an embodiment of the present disclosure, where the computer program product, when running on a computer, causes the computer to perform the method in the first aspect.

### BRIEF DESCRIPTION OF THE DRAWINGS

In order to more clearly explain the embodiments of the present disclosure or the conventional technology, the accompanying drawings referred to for describing the embodiments or the conventional technology are briefly described hereinafter. Apparently, the accompanying drawings in the following description are only embodiments of the present disclosure. Other drawings may be obtained for those of ordinary skill in the art based on the provided drawings without any creative efforts.
Figure 1 is a flowchart of a method for video displaying according to an embodiment of the present disclosure;
Figure 2a is a schematic diagram of a display interface of a client according to an embodiment of the present disclosure;
Figure 2b is a schematic diagram of a display interface of a client according to an embodiment of the present disclosure;
Figure 3 is a flowchart of a method for video displaying according to another embodiment of the present disclosure; and
Figure 4 is a structural diagram of an apparatus for video displaying according to an embodiment of the present disclosure.

### DETAILED DESCRIPTION

To make the purpose, technical solutions and beneficial effects more clear, the technical solutions in the embodiments of the present disclosure will be clearly and completely described hereinafter with reference to the drawings in the embodiments according to the present disclosure. It is apparent that the described embodiments are only some rather than all the embodiments of the present disclosure. All other embodiments, obtained by those skilled in the art based on the embodiments in the present disclosure without any creative work, fall within the scope of protection of the present disclosure.

The inventor finds out that in related art, a first user, when using an application with live steaming functionalities, may switch between different videos included in the same type of live stream by triggering a slide operation. For example, the first user may trigger a slide operation to switch between multiple videos in a live stream followed by the first user. In a specific example, the first user, when using the aforementioned application, may follow one or more other users. Accordingly, each user, when living streaming, may correspond to a live streaming video. The live stream followed by the first user may include live streaming videos corresponding to users who are live streaming among the users followed by the first user. In an example, the videos in the live stream followed by the first user may be ranked in a predetermined order, and accordingly, the user may trigger a slide operation on a page corresponding to one of the videos, to thereby switch to a page corresponding to another video. The multiple videos are switched, played, or presented in the same order in which the multiple videos are ranked. For example, the live stream followed by the user includes three videos, which are ranked from first to last in the order of video 1, video 2 and video 3. The first user may trigger an upward slide operation on a page corresponding to video 1, to thereby switch a page displayed on the client to a page corresponding to video 2. Similarly, the user may trigger an upward slide operation on the page corresponding to video 2, to thereby switch a page displayed on the client to a page corresponding to video 3.

In an example, the current slide operation can only implement page switch of the client among videos included in the same type of live stream. For example, in the above scenario, when the user triggers the upward slide operation on the page corresponding to video 2, the page displayed on the client is switched to the page corresponding to video 3. However, if the user continues to trigger an upward side operation on the page corresponding to video 3, the page displayed on the client will not change since video 3 is the last-ranked video in the three videos in the live stream followed by the user, leading to poor user experience.

**In** order to solve the above problem, a method and an apparatus for video displaying are provided according to the embodiments of the present disclosure.

The embodiments of the present disclosure have the following advantages over the conventional technology.

A method for video displaying is provided according to the embodiments of the present disclosure. In an example, the method may be performed by a client. The client may display a first page corresponding to a first video, where the first video is in a live stream of a first type. When the client is displaying the first page, a first user may trigger a first slide operation on the first page. Accordingly, the client may display a second page corresponding to a second video in response to the first slide operation, where the second video is in a live stream of a second type. As can be seen, with the solutions according to the embodiments of the present disclosure, a user can switch a page displayed on the client to a page corresponding to a video in the live stream of the second type, by triggering the first slide operation on a page corresponding to a video in the live stream of the first type. In this way, the user can switch between pages corresponding to live streams of different types by triggering the first slide operation, thereby enriching the interaction and improving the user experience.

Some non-limiting implementations of the present disclosure are described in detail in conjunction with the drawings.

### Exemplary method

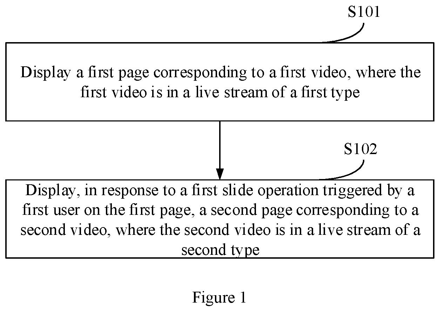

Reference is made to Figure 1, which is a flowchart of a method for video displaying according to an embodiment of the present disclosure. In this embodiment, the method may be applied to a client corresponding to a first user. The client may be a client corresponding to the aforementioned application with live streaming functionalities. The client corresponding to the first user may be a client on which the first user has logged-in with a corresponding account.

The method for video displaying shown in Figure 1 may include the following steps S101 and S102.

Step S101 includes displaying a first page corresponding to a first video, where the first video is in a live stream of a first type.

Step S102 includes displaying, in response to a first slide operation triggered by a first user on the first page, a second page corresponding to a second video, where the second video is in a live stream of a second type.

In contrast to switching within the same type of live streams, switching between different types of live streams is achieved by slide according to the present disclosure, which on one hand matches the expectation a user has for slide switch, and on the other hand, satisfies the demand of the user to watch different types of live streams, thereby enriching interaction experience and facilitating the user to obtain videos of interest quickly.

In an embodiment of the present disclosure, the live stream of the first type and the live stream of the second type are not specifically limited. The live stream of the first type and the live stream of the second type are different types of live streams.

In an example, the live stream of the first type may be the aforementioned live stream followed by the first user. The live stream of the second type may be a live stream of any other type different from the live stream followed by the first user. For example, the live stream of the second type may be a recommended live stream corresponding to the first user. In this case, the user may trigger a first slide operation on a page corresponding to a video in the live stream followed by the user, to switch a page displayed on the client to a page corresponding to a video in the recommended live stream corresponding to the user. In this way, the user can switch between pages corresponding to different types of live streams by triggering the first slide operation, thereby enriching the interaction and improving the user experience.

The live stream of the first type may include multiple videos. For example, the live stream of the first type may include videos respectively corresponding to multiple live streaming rooms. The first video may be one of the multiple videos in the live stream of the first type. In an example, the first page may be a page for displaying the first video. A first image included in the first video may be displayed on the first page, where the first image may be a video frame of the first video.

As noted above, the live stream followed by the first user may include multiple videos that are ranked in a predetermined order. In a case that the live stream of the first type is a live stream followed by the first user, the first video may be the last one of the multiple videos. In this case, in conventional technology, switching between live streaming pages does not occur on the client if the user triggers an upward slide operation on the first page. By contrast, in the embodiment of the present disclosure, with consideration of the fact that the first user may want to watch other live streaming pages when watch the first page, after the first user triggers the first slide operation on the first page, the client can display, in response to the first slide operation, the second page corresponding to the second video in the recommended live stream corresponding to the first user, so that the user can continue to watch the recommended live stream corresponding to the first user, thereby improving user experience of the first user.

That is, according to the present disclosure, while the user is watching the live stream of the first type, in a case that the multiple videos in the live stream of the first type do not run out for switching, a video in the live stream of the first type is switched to and displayed in response to a switch operation. In a case that the multiple videos in the live stream of the first type run out for switching (that is, the last video in the live stream of the first type has been switched to and displayed), a video in the live stream of the second type is switched to and displayed, thereby avoiding interruption of live stream watching of the user, and improving live stream watching experience of the user.

The first slide operation referred to herein may be an upward slide operation. In an example, the upward slide operation may be sliding upward by a first predetermined distance, namely, sliding upward by the first predetermined distance on a screen of the client. The first predetermined distance may be set according to the actual situation, and is not limited herein.

In an embodiment of the present disclosure, the first slide operation may be sliding upward by the first predetermined distance with a specific strength. The specific strength is greater than or equal to a predetermined strength, and the predetermined strength may be set according to the actual situation, which is not limited herein. In an example, the predetermined strength may be greater than a strength needed for an operation of triggering the "switching between the pages corresponding to the multiple videos within the same type of live streams" as described above. For example, the user may switch between pages corresponding to the videos in the live stream followed by the user by performing a "gentle upward slide" operation, and the predetermined strength is greater than the strength of the "gentle upward slide" operation.

It should be noted that for the second video, in a case that the live stream of the second type is a recommended live stream corresponding to the first user, the recommended live stream corresponding to the first user may include multiple videos. Like the live stream followed by the first user, the multiple videos in the recommended live stream for the first user may also be ranked in a predetermined order. In an embodiment, the second video may a first-ranked video among the multiple videos included in the recommended live stream for the first user. Accordingly, like the first page, the second page may be a page for displaying the second video, and a video frame of the second video may be displayed on the second page.

According to the present disclosure, when the user is browsing a followed page and switches to the last video in a live stream corresponding to the following page, a recommended page is switched to and the first video in a live stream corresponding to the recommended page is displayed, thereby avoiding affecting user experience cause by interruption of live stream watching of the user due to failure of further switching after switching to the last video on the followed page.

In an example, first prompt information may be presented in a predetermined region of the first page, where the first prompt information is used to prompt the first user to watch the live stream of the second type. The first prompt information can guide the first user, thereby improving user experience. The predetermine region is not limited in the embodiment of the present disclosure. For example, the predetermined region may be located at the bottom of the first page, thereby guiding the first user without affecting the user watching the first page. For example, prompt information such as "watch popular live streams" may be displayed at the bottom of the first page.

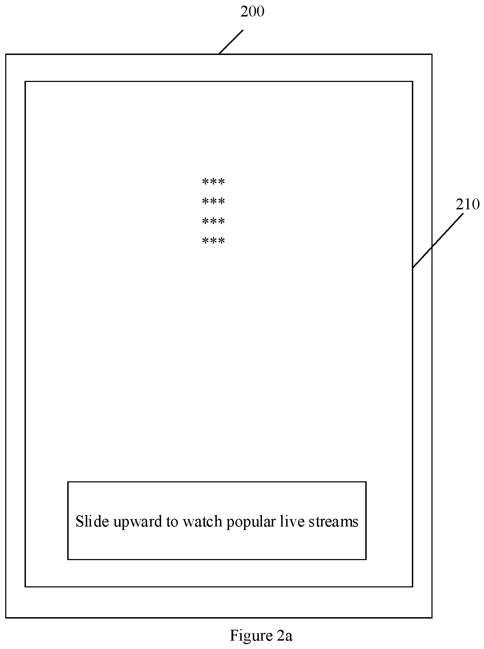

In an example, the first prompt information may be used to prompt the first user to trigger the first slide operation to watch the live stream of the second type, thereby effectively guiding the first user to perform a subsequent operation. In this way, when the first user wants to watch the live stream of the second type, the first user can trigger the first slide operation according to the first prompt information, to watch the live stream of the second type. For example, prompt information such as "slide upward to watch popular live streams" may be displayed at the bottom of the first page. For example, reference may be made to Figure 2a for better understanding thereof.

Figure 2a is a schematic diagram of a display interface of a client according to an embodiment of the present disclosure. As shown in Figure 2a, a display interface 200 includes a first page 210, first prompt information "slide upward to watch popular live streams" is displayed at the bottom of the first page 210, and other content on page 210, such as other text or images, are represented by *** in Figure 2a.

It should be noted that Figure 2a is for illustrating the present solutions, but does not constitute any limitation on the embodiments of the present disclosure. For example, in a case that the live stream of the second type is not a recommended live stream corresponding to the first user, the first prompt information displayed at the bottom of the first page 210 may not be the "slide upward to watch popular live streams" as shown in Figure 2a.

With consideration into the fact that it takes time for the first user to trigger the first slide operation, in order to avoid a failed operation due to the first user being unfamiliar to the first slide operation, in an embodiment of the present disclosure, the client may present the second prompt information during triggering of the first slide operation by the first user, where the second prompt information is used to prompt the first user to finish the first slide operation to watch the live stream of the second type. For example, the second prompt information may be "continue sliding upward to watch popular live streams".

A display region of the second prompt information is not limited in the embodiments of the present disclosure. In an example, the second prompt information may be displayed in a central region of a current page displayed on the client, thereby ensuring that the first user can see the second prompt information and guaranteeing prompt effects of the second prompt information. In addition, in an example, during the process of the first user performing the first upward slide operation, the first page is moved upward on the display interface of the client, and part of the second page emerges at the bottom of the display interface.

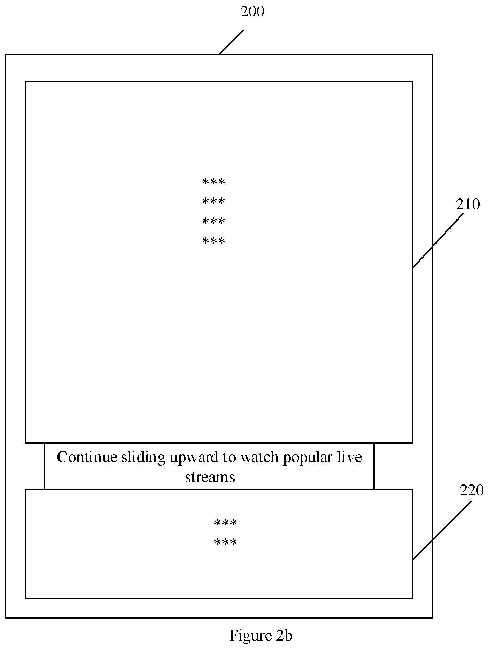

For example, reference may be made to Figure 2b for better understanding.

Figure 2b is a schematic diagram of a display interface of a client according to an embodiment of the present disclosure. Contents displayed on the display interface of the client before the user performs the first slide operation are as those shown in Figure 2a, and contents displayed on the display interface during the process of the user performing the first slide operation are as those shown in Figure 2b. Compared with Figure 2a, the first page 210 is moved upward, and part of the second page 220 emerges at the bottom of the display interface. The second prompt information "continue sliding upward to watch popular live streams" is also displayed on the display interface, and other content on the display interface, such as other text or images, are represented by *** in Figure 2b.

It should be noted that Figure 2b is provided only for illustrating the present solutions, but does not constitute any limitation on the embodiments of the present disclosure. For example, in a case that the live stream of the second type is not a recommended live stream corresponding to the first user, the second prompt information displayed on the display interface may not be the "continue sliding upward to watch popular live streams" as shown in Figure 2b.

In an example, in response to the client switching a displayed page from the first page to the second page, the client may send a vibration request to an operating system of a terminal device on which the client runs, to assure the user of the switching between the live streaming pages, where the vibration request is used to request the terminal device to provide a vibration response. After receiving the vibration request, the operating system may control a relevant hardware module of the terminal device to provide a vibration response. In this way, when the client switches the displayed page to the second page (or after the client switches the displayed page to the second page), the terminal device vibrates. In this way, the first user can ascertain the switching between live streaming pages by the vibration.

According to the above description, with the solutions in the embodiments of the present disclosure, the user may trigger the first slide operation on the page corresponding to the video in the live stream of the first type, to switch the page displayed on the client to the page corresponding the video in the live stream of the second type. In this way, the user can switch between pages corresponding to different types of live streams by triggering the first slide operation, and accordingly, user experience is improved.

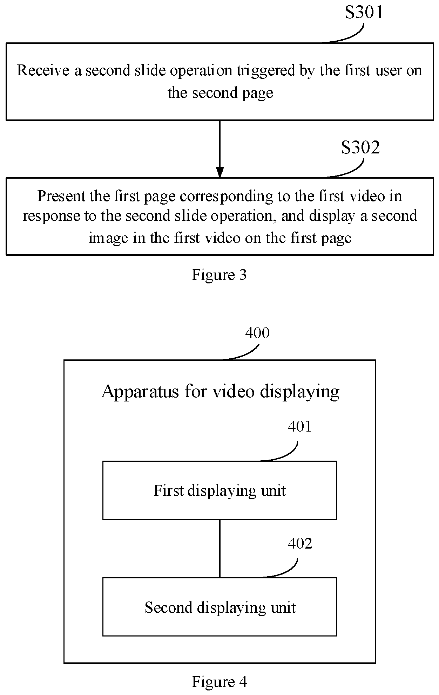

In an example, the user may want to watch the live stream of the first type again while watching the live stream of the second type. In view of this, a method for video displaying according to an embodiment of the present disclosure may further include steps S301 and S302 as shown in Figure 3. Figure 3 is a flowchart of another method for video displaying according to an embodiment of the present disclosure.

Step S301 includes receiving a second slide operation triggered by the first user on the second page.

Step S302 includes presenting the first page corresponding to the first video in response to the second slide operation, and displaying a second image in the first video on the first page.

In an embodiment of the present disclosure, the first user may trigger a second slide operation on the second page, and accordingly, after receiving the second slide operation, the client may present the first page corresponding to the aforementioned first video in response to the second slide operation, and display a second image in the first video on the first page. Like the first image, the second image may also be a video frame in the first video.

The second slide operation is not specifically limited in the embodiment of the present disclosure. In an example, a slide direction of the second slide operation is opposite to a slide direction of the first slide operation. For example, the first slide operation is an upward slide operation, and the second slide operation is a downward slide operation. In an example, the second slide operation may be sliding downward by a second predetermined distance, for example, sliding downward by the second predetermined distance with a specific strength greater than or equal to a predetermined strength. The second predetermined distance in the embodiment of the present disclosure may be determined according to the actual situation, and is not limited herein. The predetermined strength is not limited in the embodiment of the present disclosure either, and reference may be made to the above relevant descriptions, which is not repeated herein.

That is, according to the present disclosure, after switching to the live stream of the second type, the second slide operation triggered by the first user on the second page may be received; the first page corresponding to the first video is presented in response to the second slide operation, and the second image in the first video is displayed on the first page. In this way, the user can return to the live stream of the first type conveniently and quickly and continue to watch videos in the live stream of the first type, thereby shortening interaction path, improving interaction efficiency, and meeting user cognition.

### Exemplary device

Based on the method according to the above embodiments, an apparatus is further provided according to an embodiment of the present disclosure, which is introduced in conjunction with the drawings.

Reference is made to Figure 4, which is a structural diagram of an apparatus for video displaying according to an embodiment of the present disclosure. The apparatus 400 may be for example applied to a client. The apparatus 400 includes a first displaying unit 401 and a second displaying unit 402.

The first displaying unit 401 is configured to display a first page corresponding to a first video, where the first video is in a live stream of a first type.

The second displaying unit 402 is configured to display, in response to a first slide operation triggered by a first user on the first page, a second page corresponding to a second video, where the second video is in a live stream of a second type.

In an embodiment, first prompt information is presented in a predetermined region of the first page, to prompt the first user to watch the live stream of the second type.

In an embodiment, the apparatus further includes:
a third displaying unit, configured to present second prompt information during triggering of the first slide operation by the first user, where the second prompt information is used to prompt the first user to finish the first slide operation to watch the live stream of the second type.

In an embodiment, the apparatus further includes:
a sending unit, configured to send a vibration request to an operating system of a terminal device, where the vibration request is used to request the terminal device to provide a vibration response, and the terminal device is a terminal device on which the client runs.

In an embodiment, the first displaying unit 401 is configured to display a first image in the first video on the first page, and the apparatus further includes:
a fourth displaying unit, configured to present the first page corresponding to the first video in response to a second slide operation triggered by the first user on the second page, and displaying a second image in the first video on the first page.

In an embodiment, the live stream of the first type includes a live stream followed by the first user, and the live stream of the second type includes a recommended live stream corresponding to the first user.

In an embodiment, the live stream followed by the first user includes multiple videos ranked in a predetermined order, and the first video is a last-ranked video of the multiple videos.

In an embodiment, a slide direction of the first slide operation is opposite to a slide direction of the second slide operation.

In an embodiment, the recommended live stream corresponding to the first user includes multiple videos ranked in a predetermined order, and the second video is a first-ranked video of the multiple videos.

The apparatus 400 corresponds to the method according to the above-described method embodiments, and the specific implementation of the units in the apparatus 400 is based on the idea as the above-described method embodiments. Therefore, reference may be made to the description of the above method embodiments for the specific implementation of the units in the apparatus 400, which is not redundantly described herein.

A device is further provided according to an embodiment of the present disclosure, the device including a processor and a memory,
where the processor is configured to execute instructions stored on the memory to cause the device to perform the method for video displaying according to any of the above method embodiments.

A computer-readable storage medium with instructions stored thereon is further provided according to an embodiment of the present disclosure, where the instructions cause a device to perform the method for video displaying according to any of the above method embodiments.

A computer program product is further provided according to an embodiment of the present disclosure, where the computer program product, when running on a computer, causes the computer to perform the method for video displaying according to any of the above method embodiments.

Other embodiments of the present disclosure will be readily apparent to those skilled in the art by considering the specification and practicing of the invention disclosed herein. This disclosure is intended to cover any modification, use or adaptation of the disclosure, and these modifications, uses or adaptations follow the general principles of the disclosure and include common knowledge or conventional technical means in the technical field not disclosed in this disclosure. The specification and embodiments are exemplary only, while the true scope and spirit of the present disclosure are defined by the appended claims.

It should be understood that the present disclosure is not limited to the exact structures which have been described above and shown in the accompanying drawings, and various modifications and changes may be made without departing from the scope thereof. The scope of the disclosure is limited only by the appended claims.

The above are only some preferred embodiments of the disclosure, and are not intended to limit the disclosure. Any modifications, equivalent replacements, or improvements made within the spirit and principles of the disclosure shall fall within the scope of the present disclosure.

## Claims

1. A method for video displaying, applied to a client, the method comprising:
displaying a first page corresponding to a first video, wherein the first video is in a live stream of a first type; and
displaying, in response to a first slide operation triggered by a first user on the first page, a second page corresponding to a second video, wherein the second video is in a live stream of a second type.

2. The method according to claim 1, wherein first prompt information is presented in a predetermined region of the first page, to prompt the first user to watch the live stream of the second type.

3. The method according to claim 1, further comprising:
presenting second prompt information during triggering of the first slide operation by the first user, wherein the second prompt information is used to prompt the first user to finish the first slide operation to watch the live stream of the second type.

4. The method according to claim 1, further comprising:
sending a vibration request to an operating system of a terminal device, wherein the vibration request is used to request the terminal device to provide a vibration response, and the terminal device is a terminal device on which the client runs.

5. The method according to claim 1, wherein displaying the first page corresponding to the first video comprises displaying a first image in the first video on the first page, and the method further comprises:
presenting the first page corresponding to the first video in response to a second slide operation triggered by the first user on the second page, and displaying a second image in the first video on the first page.

6. The method according to claim 1, wherein the live stream of the first type comprises a live stream followed by the first user, and the live stream of the second type comprises a recommended live stream corresponding to the first user.

7. The method according to claim 6, wherein the live stream followed by the first user comprises a plurality of videos ranked in a predetermined order, and the first video is a last-ranked video of the plurality of videos.

8. The method according to claim 5, wherein a slide direction of the first slide operation is opposite to a slide direction of the second slide operation.

9. The method according to claim 6, wherein the recommended live stream corresponding to the first user comprises a plurality of videos ranked in a predetermined order, and the second video is a first-ranked video of the plurality of videos.

10. An apparatus for video displaying, applied to a client, the apparatus comprising:
a first displaying unit, configured to display a first page corresponding to a first video, wherein the first video is in a live stream of a first type; and
a second displaying unit, configured to display, in response to a first slide operation triggered by a first user on the first page, a second page corresponding to a second video, wherein the second video is in a live stream of a second type.

11. A device comprising a processor and a memory,
wherein the processor is configured to execute instructions stored on the memory, to cause the device to perform the method according to any one of claims 1 to 9.

12. A computer-readable storage medium with instructions stored thereon, wherein the instructions instruct a device to perform the method according to any one of claims 1 to 9.

13. A computer program product, wherein the computer program product, when running on a computer, causes the computer to perform the method according to any one of claims 1 to 9.
